# FASCICULE DE BREVET EUROPEEN

(11) **EP 2 758 351 B1**
(45) Date de publication et mention de la délivrance du brevet: **23.05.2018**
(21) Numéro de dépôt: 12735577.4
(22) Date de dépôt: 19.07.2012
(51) Int. Cl.: C03C 17/36, B32B 17/10, F21K 9/00, E06B 3/673

(54) **PANNEAU DE VITRAGE COMPRENANT UNE PREMIÈRE FEUILLE DE VERRE REVÊTUE AU MOINS PARTIELLEMENT D'UN REVÊTEMENT CONDUCTEUR DE L'ÉLECTRICITÉ**
VERGLASUNGSPANEEL MIT EINER ERSTEN GLASSCHEIBE, DIE ZUMINDEST PARTIELL MIT EINER ELEKTRISCH LEITFÄHIGEN BESCHICHTUNG VERSEHEN IST
GLAZING PANEL COMPRISING A FIRST GLASS PANE AT LEAST PARTIALLY COATED WITH AN ELECTRICALLY CONDUCTIVE COATING

(30) Priorité: 20.09.2011 BE 201100555
(43) Date de publication de la demande: 30.07.2014
(73) Titulaire: AGC Glass Europe, 1348 Louvain-la-Neuve (BE)
(72) Inventeur: DECRAYE, Jean-Bernard, B-6040 Jumet (BE); DEMEYERE, Michaël, B-6040 Jumet (BE); ROUCLOUX, Patrick, B-6040 Jumet (BE)
(74) Mandataire: Chabou, Samia
(86) Numéro de dépôt international: PCT/EP2012/064177
(87) Numéro de publication internationale: WO 2013/041266

(56) Documents cités:
- WO-A1-2007/055455
- WO-A1-2007/057454
- WO-A1-2007/057461
- WO-A1-2009/001264
- WO-A2-2007/077466
- WO-A2-2007/083038
- JP-A- 10 190 197
- US-A1- 2003 019 859

## Description

### 1. Domaine de l'invention

Le domaine de l'invention est celui des panneaux de vitrage comprenant au moins une feuille de verre recouverte au moins partiellement par au moins un revêtement conducteur afin d'alimenter électriquement au moins un composant électronique ou électrique.

Plus précisément, l'invention concerne la connexion électrique d'au moins un composant électronique ou électrique à une telle couche transparente conductrice.

### 2. Solutions de l'art antérieur

Parmi les panneaux de vitrage comprenant des composants électroniques ou électriques, il existe les panneaux de vitrage simple, les panneaux de double vitrage (ou plus généralement les panneaux de vitrages multiples), les panneaux de vitrage feuilletés et tout autre type de panneau de vitrage (incluant les combinaisons de panneaux de vitrages feuilletés et de panneaux de vitrage multiples).

On connait des panneaux de vitrage intégrant des composants électroniques, tels que des diodes électroluminescentes (ou LED pour « Light Emitting Diode »), par exemple pour afficher de l'information ou pour des applications dans l'éclairage ou dans la décoration. Dans le cadre de ces applications, la fabrication d'un panneau de vitrage intégrant des composants électroniques comprend typiquement une étape de dépôt d'un revêtement conducteur transparent sur la première feuille de verre, une étape de réalisation de pistes conductrices à partir du revêtement conducteur transparent et une étape de dépôt et solidarisation (par exemple au moyen d'une colle conductrice) des composants électroniques sur les pistes conductrices. Dans le cas de la réalisation d'un panneau de vitrage feuilleté (tel que décrit dans la demande de brevet n°EP1840449), un intercalaire thermoplastique, puis une seconde feuille de verre peuvent ensuite être déposés sur la première feuille de verre avant de mettre en oeuvre une étape de laminage.

Dans le cas de la réalisation d'un panneau de vitrage multiple, une cavité généralement remplie d'un gaz isolant est réalisée entre les feuilles de verre à la place de l'intercalaire thermoplastique.

Par ailleurs les panneaux de vitrage, par exemple pour les bâtiments ou pour l'automobile, doivent préférentiellement être des panneaux à basse émissivité. C'est à dire des panneaux vitrages qui présentent la propriété de réfléchir les rayonnements infrarouges extérieurs (par exemple les rayonnement solaires) afin de limiter l'échauffement de l'intérieur d'un bâtiment ou d'une automobile lié à ce rayonnement. Ces panneaux permettent également de réfléchir les rayonnements infrarouges émis par exemple par l'intérieur des habitations, et limitant par conséquent les déperditions de chaleur.

La demande de tels vitrages est souvent liée à celle de disposer d'une transmission lumineuse aussi élevée que possible. Les deux exigences de faible émissivité et de forte transmission conduisent normalement à la mise en oeuvre de solutions opposées en terme de structure. Il est nécessaire de procéder à des compromis difficiles à établir.

A ces exigences s'ajoutent celles de disposer de vitrages aussi neutres en couleur que possible et notamment en réflexion. Enfin la production doit rester aussi économique que possible.

Pour atteindre ces résultats la pratique la plus usuelle est de déposer sur l'une des feuilles de verre du panneau de vitrage un revêtement sous la forme d'un système de couches minces comportant une ou plusieurs couches capables de réfléchir les rayonnements infrarouges. Des systèmes de ce type comprennent en général une ou plusieurs couches métalliques, notamment des couches d'argent de quelques nanomètres d'épaisseur. Les couches doivent être suffisamment minces pour ne pas réduire de manière trop importante la transmission lumineuse visible. L'épaisseur doit être aussi suffisante pour faire obstacle à la transmission des rayons infrarouges, l'épaisseur déterminant directement la fraction de ceux-ci qui sont effectivement réfléchis.

Ces revêtement de type métalliques appliqués sur les vitrages doivent simultanément remplir d'autres conditions. En premier, il est nécessaire de faire en sorte que les systèmes résistent aux agressions chimiques ou mécaniques auxquelles ils peuvent être exposés. Les couches métalliques sont habituellement déposées sur le substrat verrier par des techniques de dépôt sous vide du type pulvérisation cathodique assistée par champ magnétique, plus communément appelée « magnetron sputtering ». Les couches obtenues par ces techniques offrent l'avantage d'une grande régularité de composition, d'épaisseur et d'état de surface. Elles sont cependant très fragiles et doivent être protégées par des couches additionnelles. On utilise de façon parfaitement traditionnelle des couches diélectriques transparentes, d'oxydes et/ou de nitrures et/ou oxynitrures métalliques ou encore de mélanges de ceux-ci, offrant la résistance requise.

Simultanément les couches métalliques doivent aussi être protégées d'une diffusion possible à partir du substrat, diffusion qui modifierait de façon désavantageuse les propriétés de la couche métallique réfléchissante. La nature des couches diélectriques situées entre le substrat et la couche métallique est souvent analogue à celle des couches situées au-dessus de cette même couche métallique. Il s'agit d'oxydes et/ou de nitrures et/ou oxynitrures métalliques.

Traditionnellement, la séquence des couches d'un tel revêtement métallique se compose de la façon suivante :
verre / diélectrique inférieure / métal / diélectrique supérieure
chacun des diélectriques inférieur et supérieur comportant le plus souvent plusieurs couches de nature différente.

Des diélectriques parmi les plus utilisés sont notamment ZnO, TiO2, SnO2, Si3N4....et leurs alliages. Ces couches diélectriques offrent diverses propriétés optiques et se distinguent aussi par leurs conditions de production industrielle.

Ainsi, dans le cadre de la fabrication d'un panneau de vitrage intégrant des composants électronique, on peut avantageusement utiliser le revêtement de type métallique précité comme revêtement transparent conducteur d'alimentation des composants électroniques.

Ainsi, on peut mettre en oeuvre une étape de réalisation des pistes conductrices du circuit conducteur interne à partir du revêtement du type métallique, ces pistes étant destinées à être connecté électriquement aux bornes des composants électroniques.

Les pistes conductrices peuvent être réalisées dans le revêtement conducteur par gravure (ou ablation) au moyen d'un laser dont le faisceau, focalisé sur le revêtement conducteur, brûle localement ce revêtement et forme ainsi des lignes isolantes (où la couche conductrice a été brûlée) dont l'épaisseur dépend du diamètre du faisceau laser focalisé au niveau du revêtement conducteur. On obtient typiquement des épaisseurs de ligne isolante de l'ordre de 100 µm. Ainsi, une piste conductrice est constituée par une bande de revêtement conducteur délimitée par deux telles lignes isolantes. La résistance de la piste conductrice est directement proportionnelle à sa largeur, ce qui impose, pour les revêtement conducteurs de type métallique généralement utilisés, des largeurs de piste conductrice de l'ordre de quelques mm pour obtenir une valeur de résistance compatible avec les applications visées.

Les composants électroniques généralement utilisés pour être intégrés dans un tel panneau de verre se présentent sous la forme de composants CMS (pour « Composant Monté en Surface » ou SMD pour « Surface Mount Device » en anglais). Chaque borne de connexion d'un de ces composants électroniques CMS doit être reliée mécaniquement et électriquement à une piste conductrice distincte, par exemple, grâce à de la colle conductrice (par exemple une colle epoxy chargée de particules d'argent) ou par soudure à l'étain.

Cependant, la couche diélectrique supérieure du revêtement conducteur métallique limite l'efficacité du contact électrique entre les bornes de connexion du composant électronique et la couche de métal. Ainsi, il est nécessaire d'appliquer des tensions électriques élevées (dont la valeur dépend notamment de l'épaisseur de la couche diélectrique supérieure) qui viennent localement « claquer » la couche diélectrique supérieure afin d'établir le contact électrique.

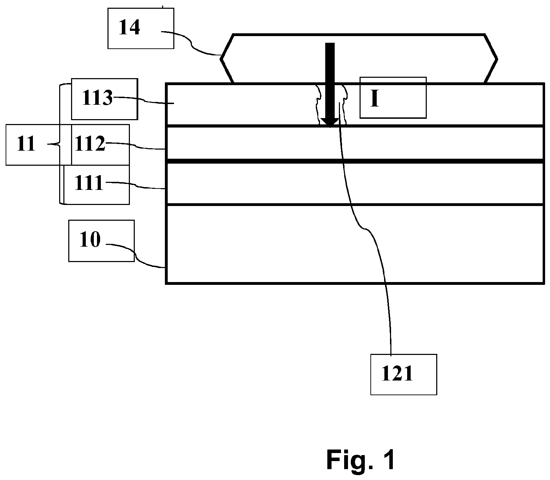

Ainsi, le contact électrique n'est pas uniforme. En fait, tel qu'illustré par la ***figure 1*** présentant un morceau de panneau de vitrage comprenant une feuille de verre 10 revêtue d'un revêtement métallique 11 (comprenant par exemple une couche diélectrique inférieure 111, une couche métallique 112 et une couche diélectrique supérieure 113) sur lequel est solidarisée une borne de connexion 14 d'un composant électronique, seuls des micro-contacts électriques ponctuels 121 sont créés (au niveau des claquages de la couche diélectrique supérieure 113 entre la borne de connexion 14 du composant électronique et la couche métallique 112. Ces micro-contacts électriques conduisent à une résistance électrique globale de ce type de contact électrique qui est élevée. Par ailleurs, la formation de ce type de contact électrique n'est pas maitrisée et n'est pas reproductible, les claquages locaux de la couche diélectrique supérieure n'étant pas prévisibles. En outre, ce type de contact électrique se dégrade avec le temps du fait d'un plus fort échauffement lié au passage du courant au niveau de micro-contacts de faibles surfaces. Enfin, l'application de tension électriques élevées risque d'endommager le composant électronique.

### 3. Objectifs de l'invention

L'invention a notamment pour objectif de pallier ces inconvénients de l'art antérieur.

Plus précisément, un objectif de l'invention, dans au moins un de ses modes de réalisation, est de fournir une technique de connexion électrique d'un composant électronique à un revêtement conducteur d'un panneau de vitrage comprenant une couche métallique couverte par au moins une couche isolante qui permette d'obtenir un bon contact électrique entre les bornes de connexion du composant électronique et la couche métallique du revêtement conducteur.

Un autre objectif de l'invention, dans au moins un de ses modes de réalisation, est de mettre en oeuvre une telle technique qui permette de réduire la valeur de la résistance du contact électrique entre les bornes de connexion du composant électronique et la couche métallique du revêtement conducteur et donc la tension à appliquer entre la borne de connexion et la couche métalliques.

Un autre objectif de l'invention, dans au moins un de ses modes de réalisation, est de mettre en oeuvre une telle technique qui permette d'obtenir des contacts électriques qui sont reproductibles et prévisibles.

Un autre objectif de l'invention, dans au moins un de ses modes de réalisation, est de fournir une telle technique qui permette d'obtenir des contacts électriques qui sont plus stables dans le temps.

Un autre objectif de l'invention, dans au moins un de ses modes de réalisation, est de fournir une telle technique qui n'endommage pas le composant électronique.

L'invention, dans au moins un de ses modes de réalisation, a encore pour objectif de fournir une telle technique qui soit simple à mettre en oeuvre et pour un faible coût et notamment dans un environnement de production de transformateur verrier.

### 4. Exposé de l'invention

Conformément à un mode de réalisation particulier, l'invention concerne un panneau de vitrage conformément à la revendication 1. Selon l'invention, dans un tel panneau, la couche isolante comprend au moins une première fenêtre ouvrant sur la couche métallique localisée au niveau de la borne de connexion.

Bien entendu, on entend par verre, tous les types de verres et matériaux transparents équivalents tels que les verres minéraux et les verres organiques. Le verre minéral peut être constitué indifféremment d'un ou plusieurs types de verres connus comme les verres sodo-calcique, les verres au bore, les verres cristallins et semi-cristallins. Le verre organique peut être un polymère ou un copolymère transparent thermodur ou thermoplastique rigide tel que, par exemple, une résine de synthèse polycarbonate, polyester ou polyvinylique transparente.

Ainsi, du fait que la première fenêtre ouvre sur la couche métallique, un contact électrique peut être créé entre la borne de connexion du composant électronique et la couche métallique sans qu'aucune altération ou endommagement (par exemple claquage) de la couche isolante ne se produise. Ainsi, le contact électrique présente une résistance plus faible et permet donc que des tensions électriques plus faibles soient appliquées entre la borne de connexion et la couche métallique. De ce fait, le composant électronique souffre moins de la tension appliquée.

Ainsi, on obtient des contacts électriques qui sont reproductibles et prévisibles et plus stables dans le temps.

Avantageusement, un matériau conducteur électrique est disposé entre la borne de connexion et la couche métallique via la première fenêtre.

Ainsi, quelques soient les formes et dimensions respectives de la première fenêtre et de la borne de connexion, le contact électrique entre la borne de connexion et la couche métallique est assuré via le matériau conducteur électrique. Selon l'invention, la couche métallique comprend également une seconde fenêtre qui coïncide au moins partiellement avec la première fenêtre.

Par exemple, on réalise une fenêtre globale (formée par la première fenêtre et la seconde fenêtre) dans toute l'épaisseur du revêtement conducteur, ce qui, dans le cas où on réalise les fenêtres par retrait de matière, est plus aisé que de réaliser sélectivement une première fenêtre uniquement dans la couche isolante. Dans ce cas, le contact électrique avec la couche métallique est pris par la tranche de la couche métallique qui est rendue apparente au niveau de la seconde fenêtre.

Avantageusement, un matériau conducteur électrique est disposé entre la borne de connexion et la couche métallique via au moins une des première fenêtre et seconde fenêtre.

Avantageusement, le matériau conducteur électrique est une colle conductrice chargée à l'argent.

Selon un mode de mise en oeuvre avantageux, au moins une des première fenêtre et seconde fenêtre est(sont) un rectangle dont le plus grand coté est orienté de manière perpendiculaire au sens de circulation du courant dans la couche métallique.

En effet, cette configuration permet d'optimiser la longueur du contact électrique qui est ainsi la plus grande possible.

Avantageusement, la couche isolante comprend plusieurs premières fenêtres rectangulaires parallèles localisée au niveau de la borne de connexion, le plus grand coté de chacune de ces premières fenêtres est orienté de manière perpendiculaire au sens de circulation du courant dans la couche métallique.

Bien entendu, la couche métallique peut également comprendre plusieurs seconde fenêtre qui coïncident avec les premières fenêtres.

Ainsi, en cas de défaillance ou de défaut sur l'une des fenêtre rectangulaire, la fenêtre suivante dans le sens de circulation du courant peut prendre le relais et assurer le contact électrique.

Avantageusement, au moins une de la (des) fenêtre(s) rectangulaire(s) présente une longueur égale à l'une des dimensions, dans le plan du panneau, de la borne de connexion à laquelle la fenêtre est associée.

Avantageusement, le revêtement conducteur est un revêtement basse émissivité.

L'invention selon au moins un de ses modes de réalisation concerne également un procédé de fabrication d'un panneau vitrage selon la revendication 8. Selon l'invention, le procédé comprend également une étape de réalisation d'au moins une première fenêtre dans la couche isolante, ladite première fenêtre ouvrant sur la couche métallique localisée au niveau de la borne de connexion. Le procédé comprend également une étape de réalisation, dans la couche métallique d'une seconde fenêtre qui coïncide au moins partiellement avec la première fenêtre.

Selon un mode de mise en oeuvre avantageux de l'invention, un matériau conducteur électrique est disposé entre la borne de connexion et la couche métallique via au moins une des première fenêtre et seconde fenêtre.

Avantageusement, le matériau conducteur électrique est une colle conductrice chargée à l'argent.

Avantageusement, au moins une des première fenêtre et seconde fenêtre est(sont) un rectangle dont le plus grand coté est orienté de manière perpendiculaire au sens de circulation du courant dans la couche métallique.

Selon un mode de réalisation avantageux de l'invention, la couche isolante comprend plusieurs premières fenêtres rectangulaires parallèles localisée au niveau de la borne de connexion, le plus grand coté de chacune de ces premières fenêtres est orienté de manière perpendiculaire au sens de circulation du courant dans la couche métallique.

Avantageusement, au moins une de la (des) fenêtre(s) rectangulaire(s) présente une longueur égale à l'une des dimensions, dans le plan du panneau, de la borne de connexion à laquelle la fenêtre est associée.

Avantageusement, le revêtement conducteur est un revêtement basse émissivité.

Selon un mode de mise en oeuvre avantageux, les première fenêtre dans la couche isolante et seconde fenêtre dans la couche métallique sont obtenues par ablation respectivement de la couche isolante et de la couche métallique au moyen de l'une au moins des techniques suivantes :
- ablation par rayonnement électromagnétique ;
- ablation mécanique ;
- ablation par projection de fluide ;
- ablation par lithographie.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un schéma d'un morceau de panneau de vitrage classique comprenant une feuille de verre revêtue d'un revêtement métallique sur lequel est solidarisée une borne de connexion d'un composant électronique ;
- la figure 2 présente une vue de dessus d'un panneau de vitrage selon un premier exemple de réalisation de l'invention ;
- les figures 3a et 3b présentent des vues en coupe d'une portion du panneau de la figure 2 selon des premier et second mode de réalisation de l'invention, les coupes étant réalisées au niveau de la première borne de connexion de la diode ;
- la figure 4 illustre certaines étapes d'un procédé de fabrication du panneau vitrage selon le premier exemple de réalisation de l'invention.

### 6. Description d'un mode de réalisation de l'invention

La présente invention va être décrite en faisant référence à des modes de réalisation particuliers et en faisant référence à certains dessins mais l'invention n'est pas limitée par cela et n'est limitée que par les revendications. Dans les dessins, la taille et les dimensions relatives de certains éléments peuvent être exagérés et ne pas être dessinés à l'échelle pour des raisons d'illustration.

De plus les termes premier, second, troisième et similaire dans la description et dans les revendications sont utilisés pour distinguer entre des éléments similaires et non pas nécessairement pour décrire une séquence qu'elle soit temporelle, spatiale, à des fins de classement ou autre. Il est bien entendu que les termes ainsi utilisés sont interchangeables dans des circonstances appropriées et que les modes de réalisations de l'invention décrits ici sont capables d'opérer dans d'autres séquences que celles décrites ou illustrées ici.

De plus, les termes haut, bas, au-dessus, en-dessous et similaire dans la description et les revendications sont utilisés pour des raisons de description et non pas nécessairement pour décrire des positions relatives. Il est bien entendu que les termes ainsi utilisés sont interchangeables dans des circonstances appropriées et que les modes de réalisation de l'invention décrits ici sont capables d'être opéré dans d'autres orientations que celles décrites ou illustrées ici.

Il est à remarquer que le terme "comprenant", utilisé dans les revendications, ne doit pas être interprété comme étant restreint aux moyens listés après celui-ci; il n'exclue pas d'autres éléments ou étapes. Il doit donc être interprété comme spécifiant la présence des éléments spécifiés, entiers, étapes ou composants référés, mais n'exclue pas la présence ou l'addition d'un élément, entier, étape ou composant, ou groupe de ceux-ci. Donc l'étendue de l'expression "un appareil comprenant les moyens A et B" ne doit pas être limité à des appareils consistant seulement des composants A et B. Cela veut dire qu'en ce qui concerne la présente invention, les seuls composants pertinents de l'appareil sont A et B.

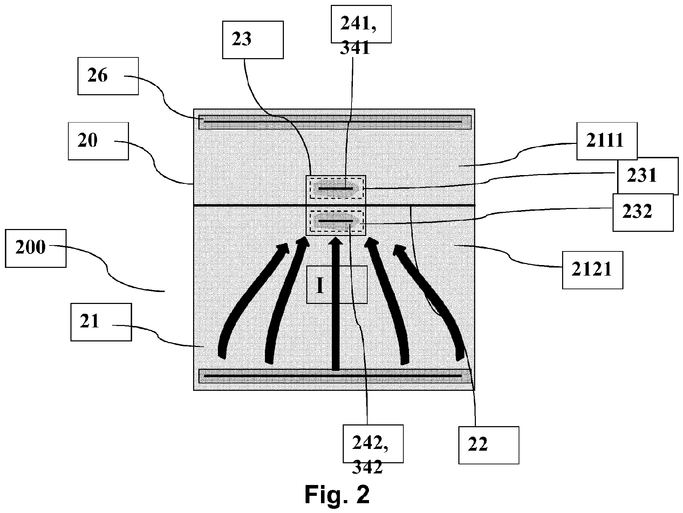

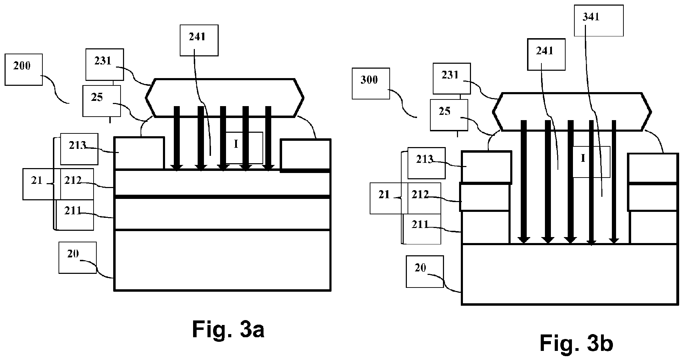

On se place dans la suite dans le cadre d'un panneau de vitrage selon un premier exemple de réalisation de la présente invention illustré par les ***figures 2******,*** ***3a*** *(*vue en coupe d'une portion 200 du panneau de la figure 2 selon un premier mode de réalisation de l'invention*) **et 3b** (*vue en coupe d'une portion 300 du panneau de la figure 2 selon un second mode de réalisation de l'invention*)* et dans lequel le panneau de vitrage est un panneau de vitrage simple.

Le panneau de vitrage comprend une première feuille de verre 20 revêtue d'un revêtement conducteur de l'électricité 21, le revêtement conducteur 21 comprenant un empilement d'une première couche isolante (par exemple une première couche diélectrique) 211, d'une couche métallique 212 et d'une seconde couche isolante (par exemple une seconde couche diélectrique) 213, la couche métallique 212 étant disposée entre la première couche isolante 211 et la seconde couche isolante 213 (et donc a fortiori entre la première feuille de verre 20 et la seconde couche isolante 213). Par exemple, chacune des première couche isolante 211, couche métallique et seconde couche isolante 213 présente une épaisseur de 50nm.

Bien entendu, selon des variantes du présent premier exemple de réalisation de l'invention, le revêtement conducteur peut ne pas comprendre la première couche isolante 211. Il peut également comprendre tout empilement quelconque de couches métalliques et de couche isolantes à partir du moment où cet empilement s'achève (coté le plus éloigné de la feuille de verre 20) par une couche métallique, elle-même recouverte par une couche isolante.

Des revêtements conducteurs typiques sont des revêtements à base d'argent. Ces revêtements conducteurs peuvent comprendre une, deux, voire trois couches d'argent (ou tout autre matériau conducteur), séparées par des couches de diélectrique. Pour des couches comprenant une épaisseur totale de matériau conducteur comprise entre 10 et 30 nm, la résistance de surface peut atteindre des valeurs très faibles comprise entre 2 et 3 Ω/carré. Cependant, toute autre couche même plus faiblement conductrice pourrait convenir.

Par exemple, ces couches peuvent être déposées par pulvérisation sous-vide assistée par magnétron qui a l'avantage de pouvoir être réalisé sur la ligne de production du verre float.

Par exemple, le revêtement conducteur est un revêtement basse émissivité tel que les Top N, Top N+, Top 1.0, Energy N et Energy NT commercialisés par la société AGC.

Préférentiellement, le revêtement conducteur est transparent dans le visible, i.e. dont la transmission lumineuse dans le visible (bande lumineuse s'étendant entre 400nm et 800nm) est supérieure à 70%.

Bien entendu, conformément à l'invention, la première feuille de verre 20 ne pourrait être revêtue que partiellement du revêtement conducteur.

Le panneau de vitrage comprend également un composant électronique 23, par exemple une diode électroluminescente 23 (ou « Light Emitting Diodes » en anglais ci-après désignées par LED) sous la forme d'un composant CMS disposé sur la première feuille de verre 20, la diode 23 comprenant des première 231 et seconde 232 bornes de connexion électriquement reliées au revêtement conducteur 21.

Le panneau de vitrage comprend également deux barres omnibus 26 (ou « busbar » en anglais), connectées électriquement au revêtement conducteur 21 (e.g. grâce à une colle conductrice ou par tout autre moyen disponible tel que la soudure) et permettant de relier électriquement la diode 23 à un circuit électrique externe par exemple un dispositif d'alimentation externe (non représenté) de la diode 23. Les busbars 26 sont par exemple des busbars tels que décrits dans WO2009109542 ou des busbars tels que décrits dans EP1840449.

En outre, tout type de composants électroniques pourrait être mis en oeuvre dans le cadre de la présente invention, par exemple des capteurs, des résistances, des condensateurs, ... ou même des composants optoélectroniques, par exemple des LEDs, des OLEDs (pour « Organic Light Emitting Diodes ») des photodétecteurs, ... ou électro-mécanique : des modules piezoélectriques, des MEMs (pour « Micro Electro Mechanical Structure »), ... ou même tout autre type de composant nécessitant une alimentation électrique. Ces composants peuvent se présenter sous tout type de forme, par exemple telle que des composants CMS ou sous tout autre type de package ou même sous la forme de puces (« die » ou « chip » en anglais).

Tel qu'illustré par la figure 2, on forme un circuit conducteur interne sur le revêtement conducteur 21 par exemple par élimination (par exemple par gravure ou ablation) du revêtement conducteur 21 sur une fine bande, par exemple à l'aide d'un laser (dont le faisceau, focalisé sur le revêtement conducteur, brûle localement ce revêtement et forme ainsi une ligne isolante 22 (où la couche conductrice a été brûlée) dont l'épaisseur dépend du diamètre du faisceau laser focalisé au niveau du revêtement conducteur) ou par attaque chimique (« chimical etching »). D'autres méthodes sont possibles pour la formation du circuit conducteur interne, par exemple dépôt par masquage (par exemple sérigraphie). Sur la figure 2, le circuit conducteur interne comprend une première 2111 et une seconde 2121 zones isolées électriquement grâce à la ligne isolante 22, chacune étant reliée à un potentiel électrique distinct via un busbar 26.

Ainsi, les première 231 et seconde 232 bornes de connexion de la diode 23 sont respectivement connectées électriquement à la première zone 2111 et à la seconde zone 2121 du revêtement conducteur 21.

On décrit ci-après plus spécifiquement la figure 3a.

La seconde couche isolante 213 comprend des premières 241, 242 fenêtres ouvrant sur la couche métallique. Ces premières 241 242 fenêtres sont localisées respectivement au niveau des première 231 et seconde 232 bornes de connexion de la diode 23.

Préférentiellement, chacune des premières 241, 242 fenêtres est un rectangle dont le plus grand coté est orienté de manière perpendiculaire au sens de circulation du courant I (matérialisé sur la figure 2 par les flèches pleines) dans la couche métallique 212 du revêtement conducteur 21.

Par exemple, les premières 241, 242 fenêtres présentent une largeur de 0,1 mm et une longueur égale à l'une des dimensions, dans le plan du panneau, respectivement des première 231 et seconde 232 bornes de connexion de la diode 23. Par exemple, si les première 231 et seconde 232 bornes de connexion de la diode 23 sont des carrés de 2mm de côté, alors les premières 241, 242 fenêtres présentent une largeur de 0,1 mm et une longueur de 2mm. Bien entendu, les premières fenêtres peuvent également prendre toute autre forme et présenter toutes autres dimensions.

Par exemple, un matériau conducteur électrique 25, par exemple une colle conductrice chargée à l'argent (bien entendu, on peut également mettre en oeuvre un adhésif ou une résine époxy chargés à l'argent), est disposée entre les première 231 et seconde 232 bornes de connexion et la couche métallique 212 via les premières 241, 242 fenêtres afin d'assurer le contact électrique entre première 231 et seconde 232 bornes de connexion et la couche métallique 212. Par exemple l'épaisseur de la pellicule de colle conductrice 25 est de 100µm.

Dans le cas de la figure 3b, outre les premières fenêtres 241, 242 dans la seconde couche isolante 213, la couche métallique comprend également des seconde fenêtres 341, 342 qui coïncident (les premières fenêtres et les seconde fenêtres sont superposées) avec les premières fenêtres. En outre, les premières fenêtres 241, 242 et les secondes fenêtres 341, 342 sont de mêmes dimensions. Sur la figure 3b, les secondes fenêtres 341 et 342 se prolongent également dans la première couche isolante 211.

Par exemple, au niveau de chacune des première 231 et seconde 232 bornes de connexion, on réalise une fenêtre globale (formée par la première fenêtre 241, 242 et la seconde fenêtre 341, 342) dans toute l'épaisseur du revêtement conducteur 21, ce qui, dans le cas où on réalise ces fenêtres par retrait de matière, est plus aisé que de réaliser sélectivement une première fenêtre 241, 242 uniquement dans la seconde couche isolante 213. Dans ce cas, le contact électrique avec la couche métallique 212 est pris par la tranche de la couche métallique 212 (grâce à la colle conductrice 25) qui est rendue apparente au niveau de la seconde fenêtre 341, 342.

Par exemple, dans le cas des figures 3a et 3b, les premières 241, 242 fenêtres dans la seconde couche isolante 213 et les secondes fenêtres 341, 342 dans la couche métallique 212 et la première couche isolante 211 sont obtenues par ablation respectivement de la seconde couche isolante 213 et de la couche métallique 212 ainsi que la première couche isolante 211 au moyen de l'une au moins des techniques suivantes :
- ablation par rayonnement électromagnétique, par exemple ablation laser (par exemple un laser de type Néodine YAG de 25W à 1064nm avec un faisceau de diamètre de l'ordre de 100µm) ;
- ablation mécanique (par exemple grâce à une fine pointe en métal dont la dureté est choisie de sorte à griffer la(es) couche(s) concernée(s) sans endommager le verre ou les autres couches) ;
- ablation par projection de fluide ;
- ablation par lithographie.

L'ablation sélective de la seconde couche isolante 213 sans abimer la couche métallique 212, dans le cas où on réalise uniquement les première fenêtres, peut se faire par exemple par ablation laser, par exemple de type femtoseconde émettant par exemple dans l'ultraviolet, dont la puissance est choisie de telle sorte que seule la couche isolante est enlevée (autrement dit, telle que toute l'énergie émise par le laser soit absorbée par la couche isolante elle-seule). Cette puissance dépendra bien entendu du type de matériau de la couche isolante et de son épaisseur (en particulier son facteur d'absorption dans la longueur d'onde du laser).

Bien entendu, selon une variante de l'invention, dans le cas des figures 3a et 3b, les premières 241, 242 fenêtres dans la seconde couche isolante 213 et les secondes fenêtres 341, 342 dans la couche métallique 212 et la première couche isolante 211 sont obtenues par des techniques de masquage sélectif au moment du dépôts des couches concernées.

Dans le cadre d'un environnement de production de verre, les techniques par ablation laser ou par ablation mécanique seront préférées.

Selon une variante non illustrée du présent premier exemple de réalisation de l'invention, la couche isolante comprend plusieurs premières 241, 242 fenêtres rectangulaires parallèles et, le cas échéant plusieurs secondes fenêtres 341, 342 rectangulaires parallèles qui coïncident chacune avec une des premières fenêtres 241, 242, localisées au niveau de chacune des première 231 et seconde 232 bornes de connexion de la diode 23, le plus grand coté de chacune de ces fenêtres étant orienté de manière perpendiculaire au sens de circulation du courant dans la couche métallique 212.

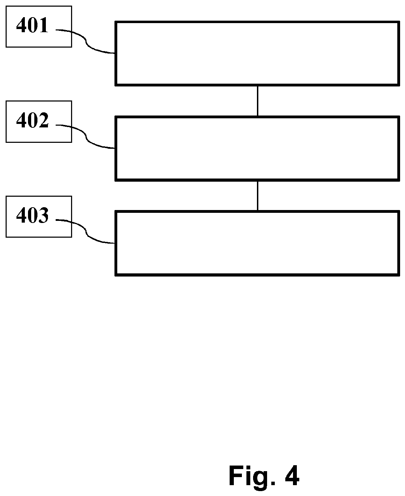

On présente, en relation avec la ***figure 4******,*** certaines étapes d'un procédé de fabrication du panneau vitrage selon le premier exemple de réalisation de l'invention.

Le procédé comprend les étapes suivantes :
- revêtement 401, au moins partiellement, d'une première feuille de verre à l'aide d'un revêtement conducteur de l'électricité, le revêtement conducteur comprenant au moins un empilement d'une couche métallique et d'une couche isolante, la couche métallique étant disposée entre la première feuille de verre et la couche isolante,
- disposition 402 d'au moins un composant électronique sur la première feuille de verre, le composant électronique comprenant au moins une borne de connexion électriquement relié au revêtement conducteur,

Le procédé comprend également une étape de réalisation 403 d'au moins une première fenêtre dans la couche isolante, ladite première fenêtre ouvrant sur la couche métallique localisée au niveau de la borne de connexion.

On s'est placé ci-avant dans le cadre d'un premier exemple de réalisation de l'invention dans le cas particulier d'un panneau de vitrage selon l'invention qui est un panneau de vitrage simple comprenant une unique feuille de verre.

Dans le cadre d'un second exemple de réalisation d'un panneau de vitrage selon la présente invention, le panneau de vitrage est un panneau de vitrage feuilleté. Dans cet exemple non illustré le panneau de vitrage est identique à celui des figures 2 et 3 si ce n'est qu'il comprend en outre un ou plusieurs feuilles d'intercalaire thermoplastique et une seconde feuille de verre, les première feuille de verre, feuille(s) d'intercalaire thermoplastique et seconde feuille de verre étant laminées.

Dans le cadre d'un troisième exemple de réalisation d'un panneau de vitrage selon la présente invention, le panneau de vitrage est un panneau de double vitrage. Dans cet exemple non illustré le panneau de vitrage est identique à celui des figures 2 et 3 si ce n'est qu'il comprend en outre une cavité comprenant un gaz isolant (par exemple de l'air sec, de l'argon, du Krypton, du CO2, ...) et une seconde feuille de verre, la cavité entre les feuilles de verre étant maintenue grâce à un intercalaire périphérique et étant fermée grâce à un joint périphérique.

Bien entendu toute autre structure de panneau de vitrage peut être envisagée, par exemple une structure combinant un panneau de vitrage multiple avec un ou des panneaux de vitrage feuilletés.

Les applications d'un panneau de vitrage selon l'invention sont multiples. On peut par exemple réaliser des tables interactives comprenant des capteurs qui réagissent à des mouvements (capteur de lumière visible, capteur de rayonnement infrarouge ou capteur de touché), des moyens d'affichage d'informations à base, par exemple, de diodes électroluminescentes et, éventuellement, un film plastique sur lequel on peut projeter des informations.

On peut également réaliser des panneaux de vitrage intégrant des diodes électroluminescentes contrôlées indépendamment et, par exemple, dont l'allumage dépend d'une intensité lumineuse reçue par un capteur lumineux ou dont l'allumage dépend de la détection d'un touché (au moyen d'un détecteur de touché) par un utilisateur.

Bien entendu, l'invention n'est pas limitée aux exemples de réalisation mentionnés ci-dessus.

## Revendications

1. Panneau de vitrage (200 ; 300) comprenant :
• une première feuille de verre (20) revêtue au moins partiellement d'un revêtement conducteur de l'électricité (21), le revêtement conducteur comprenant au moins un empilement d'une couche métallique (212) et d'une couche isolante (213), la couche métallique étant disposée entre la première feuille de verre et la couche isolante,
• au moins un composant électronique (23) disposé sur la première feuille de verre (21), le composant électronique comprenant au moins une borne de connexion (231, 232) électriquement relié au revêtement conducteur (21),
**caractérisé en ce que** la couche isolante (213) comprend au moins une première fenêtre (241, 242) ouvrant sur la couche métallique localisée au niveau de la borne de connexion (231, 232),
et **en ce que** la couche métallique comprend également une seconde fenêtre (341, 342) qui coïncide au moins partiellement avec la première fenêtre (241, 242).

2. Panneau selon la revendication précédente, **caractérisé en ce qu'**un matériau conducteur électrique (25) est disposé entre la borne de connexion (231, 232) et la couche métallique (212) via au moins une des première fenêtre (241, 242) et seconde fenêtre (341, 342).

3. Panneau selon la revendication précédente, **caractérisé en ce que** le matériau conducteur électrique (25) est une colle conductrice chargée à l'argent.

4. Panneau selon l'une quelconque des revendications précédentes, **caractérisé en ce qu'**au moins une des première fenêtre (241, 242) et seconde fenêtre (341, 342) est(sont) un rectangle dont le plus grand coté est orienté de manière perpendiculaire au sens de circulation du courant dans la couche métallique (212).

5. Panneau selon l'une quelconque des revendications précédentes, **caractérisé en ce que** la couche isolante (213) comprend plusieurs premières fenêtres rectangulaires parallèles localisée au niveau de la borne de connexion, le plus grand coté de chacune de ces premières fenêtres est orienté de manière perpendiculaire au sens de circulation du courant dans la couche métallique.

6. Panneau selon l'une quelconque des revendications 4 et 5, **caractérisé en ce qu'**au moins une de la (des) fenêtre(s) rectangulaire(s) présente une longueur égale à l'une des dimensions, dans le plan du panneau, de la borne de connexion (231, 232) à laquelle la fenêtre (241, 242) est associée.

7. Panneau selon l'une quelconque des revendications précédentes, **caractérisé en ce que** le revêtement conducteur (21) est un revêtement basse émissivité.

8. Procédé de fabrication d'un panneau vitrage (200, 300) comprenant les étapes suivantes :
• revêtement (401), au moins partiellement, d'une première feuille de verre (20) à l'aide d'un revêtement conducteur (21) de l'électricité, le revêtement conducteur comprenant au moins un empilement d'une couche métallique (212) et d'une couche isolante (213), la couche métallique étant disposée entre la première feuille de verre et la couche isolante,
• disposition (402) d'au moins un composant électronique (23) sur la première feuille de verre, le composant électronique comprenant au moins une borne de connexion (231, 232) électriquement relié au revêtement conducteur (21),
**caractérisé en ce que** le procédé comprend également une étape de réalisation (403) d'au moins une première fenêtre dans la couche isolante, ladite première fenêtre ouvrant sur la couche métallique localisée au niveau de la borne de connexion,
et **en ce que** le procédé comprend également une étape de réalisation, dans la couche métallique (212) d'une seconde fenêtre (341, 342) qui coïncide au moins partiellement avec la première fenêtre (241, 242).

9. Procédé selon la revendication précédente, **caractérisé en ce qu'**un matériau conducteur électrique (25) est disposé entre la borne de connexion et la couche métallique via au moins une des première fenêtre (241, 242) et seconde fenêtre (341, 342).

10. Procédé selon la revendication précédente, **caractérisé en ce que** le matériau conducteur électrique (25) est une colle conductrice chargée à l'argent.

11. Procédé selon l'une quelconque des revendications 8 à 10, **caractérisé en ce qu'**au moins une des première fenêtre (241, 242) et seconde fenêtre (341, 342) est(sont) un rectangle dont le plus grand coté est orienté de manière perpendiculaire au sens de circulation du courant dans la couche métallique.

12. Procédé selon l'une quelconque des revendications 8 à 10, **caractérisé en ce que** la couche isolante comprend plusieurs premières fenêtres rectangulaires parallèles localisée au niveau de la borne de connexion, le plus grand coté de chacune de ces fenêtres est orienté de manière perpendiculaire au sens de circulation du courant dans la couche métallique.

13. Procédé selon l'une quelconque des revendications 11 et 12, **caractérisé en ce qu'**au moins une de la (des) fenêtre(s) rectangulaire(s) présente une longueur égale à l'une des dimensions, dans le plan du panneau, de la borne de connexion (231, 232) à laquelle la fenêtre est associée (241, 242).

14. Procédé selon l'une quelconque des revendications 8 à 13, **caractérisé en ce que** les première fenêtre dans la couche isolante (241, 242) et seconde fenêtre (341, 342) dans la couche métallique sont obtenues par ablation respectivement de la couche isolante et de la couche métallique au moyen de l'une au moins des techniques suivantes :
- ablation par rayonnement électromagnétique ;
- ablation mécanique ;
- ablation par projection de fluide ;
- ablation par lithographie.

## Patentansprüche

1. Verglasungspaneel (200; 300), umfassend:
- eine erste Glasscheibe (20), die mindestens partiell mit einer elektrisch leitfähigen Beschichtung (21) versehen ist, wobei die leitfähige Beschichtung mindestens einen Stapel einer Metallschicht (212) und einer Isolierschicht (213) umfasst, wobei die Metallschicht zwischen der ersten Glasscheibe und der Isolierschicht angeordnet ist,
- mindestens eine elektronische Komponente (23), die auf der ersten Glasscheibe (21) angeordnet ist, wobei die elektronische Komponente mindestens eine Anschlussklemme (231, 232) umfasst, die elektrisch mit der leitfähigen Beschichtung (21) verbunden ist,
**dadurch gekennzeichnet, dass** die Isolierschicht (213) mindestens ein erstes Fenster (241, 242) umfasst, das sich auf die Metallschicht öffnet, und das auf der Höhe der Anschlussklemme (231, 232) angeordnet ist,
und dadurch, dass die Metallschicht auch ein zweites Fenster (341, 342) umfasst, das mindestens partiell mit dem ersten Fenster (241, 242) zusammenfällt.

2. Paneel nach dem vorhergehenden Anspruch, **dadurch gekennzeichnet, dass** ein elektrisch leitfähiges Material (25) zwischen der Anschlussklemme (231, 232) und der Metallschicht (212) über mindestens eines von dem ersten Fenster (241, 242) und dem zweiten Fenster (341, 342) angeordnet ist.

3. Paneel nach dem vorhergehenden Anspruch, **dadurch gekennzeichnet, dass** das elektrisch leitfähige Material (25) ein leitfähiger Klebstoff ist, der mit Silber beladen ist.

4. Paneel nach einem der vorhergehenden Ansprüche, **dadurch gekennzeichnet, dass** mindestens eines von dem ersten Fenster (241, 242) und dem zweiten Fenster (341, 342) ein Rechteck ist (sind), dessen größte Seite rechtwinklig zur Stromzirkulationsrichtung in der Metallschicht (212) ausgerichtet ist.

5. Paneel nach einem der vorhergehenden Ansprüche, **dadurch gekennzeichnet, dass** die Isolierschicht (213) mehrere erste parallele rechteckige Fenster umfasst, die auf der Höhe der Anschlussklemme angeordnet sind, wobei die größte Seite jedes dieser ersten Fenster rechtwinklig zur Stromzirkulationsrichtung in der Metallschicht ausgerichtet ist.

6. Paneel nach einem der Ansprüche 4 und 5, **dadurch gekennzeichnet, dass** mindestens eines von dem (den) rechteckigen Fenster(n) eine Länge gleich einer der Abmessungen, in der Ebene des Paneels, der Anschlussklemme (231, 232) aufweist, mit der das Fenster (241, 242) assoziiert ist.

7. Paneel nach einem der vorhergehenden Ansprüche, **dadurch gekennzeichnet, dass** die leitfähige Beschichtung (21) eine Beschichtung mit niedriger Emissivität ist.

8. Verfahren zur Herstellung eines Verglasungspaneels (200, 300), umfassend die folgenden Schritte:
- mindestens partielles Beschichten (401) einer ersten Glasscheibe (20) mit Hilfe einer elektrisch leitfähigen Beschichtung (21), wobei die leitfähige Beschichtung mindestens einen Stapel einer Metallschicht (212) und einer Isolierschicht (213) umfasst, wobei die Metallschicht zwischen der ersten Glasscheibe und der Isolierschicht angeordnet ist,
- Anordnen (402) mindestens einer elektronischen Komponente (23) auf der ersten Glasscheibe, wobei die elektronische Komponente mindestens eine Anschlussklemme (231, 232) umfasst, die elektrisch mit der leitfähigen Beschichtung (21) verbunden ist,
**dadurch gekennzeichnet, dass** das Verfahren auch einen Schritt des Bildens (403) mindestens eines ersten Fensters in der Isolierschicht umfasst, wobei sich das erste Fenster auf die Metallschicht öffnet und auf der Höhe der Anschlussklemme angeordnet ist,
und dadurch, dass das Verfahren auch einen Schritt des Bildens, in der Metallschicht (212), eines zweiten Fensters (341, 342) umfasst, das mindestens partiell mit dem ersten Fenster (241, 242) zusammenfällt.

9. Verfahren nach dem vorhergehenden Anspruch, **dadurch gekennzeichnet, dass** ein elektrisch leitfähiges Material (25) zwischen der Anschlussklemme und der Metallschicht über mindestens eines von dem ersten Fenster (241, 242) und dem zweiten Fenster (341, 342) angeordnet ist.

10. Verfahren nach dem vorhergehenden Anspruch, **dadurch gekennzeichnet, dass** das elektrisch leitfähige Material (25) ein leitfähiger Klebstoff ist, der mit Silber beladen ist.

11. Verfahren nach einem der Ansprüche 8 bis 10, **dadurch gekennzeichnet, dass** mindestens eines von dem ersten Fenster (241, 242) und dem zweiten Fenster (341, 342) ein Rechteck ist (sind), dessen größte Seite rechtwinklig zur Stromzirkulationsrichtung in der Metallschicht ausgerichtet ist.

12. Verfahren nach einem der Ansprüche 8 bis 10, **dadurch gekennzeichnet, dass** die Isolierschicht mehrere erste parallele rechteckige Fenster umfasst, die auf der Höhe der Anschlussklemme angeordnet sind, wobei die größte Seite jedes dieser ersten Fenster rechtwinklig zur Stromzirkulationsrichtung in der Metallschicht ausgerichtet ist.

13. Verfahren nach einem der Ansprüche 11 und 12, **dadurch gekennzeichnet, dass** mindestens eines von dem (den) rechteckigen Fenster(n) eine Länge gleich einer der Abmessungen, in der Ebene des Paneels, der Anschlussklemme (231, 232) aufweist, mit der das Fenster (241, 242) assoziiert ist.

14. Verfahren nach einem der Ansprüche 8 bis 13, **dadurch gekennzeichnet, dass** das erste Fenster in der Isolierschicht (241, 242) und das zweite Fenster (341, 342) in der Metallschicht durch Ablation jeweils der Isolierschicht und der Metallschicht mittels mindestens einer der folgenden Techniken erhalten werden:
- Ablation durch elektromagnetische Strahlung;
- mechanische Ablation;
- Ablation durch Fluidprojektion;
- Ablation durch Lithografie.

## Claims

1. Glazing panel (200; 300) comprising:
• a first glass sheet (20) at least partially coated with an electrically conductive coating (21), the conductive coating comprising at least one stack of a metal layer (212) and of an insulating layer (213), the metal layer being positioned between the first glass sheet and the insulating layer,
• at least one electronic component (23) positioned on the first glass sheet (21), the electronic component comprising at least one connecting terminal (231, 232) electrically connected to the conductive coating (21),
**characterized in that** the insulating layer (213) comprises at least one first window (241, 242) opening onto the metal layer located at the connecting terminal (231, 232), and **in that** the metal layer also comprises a second window (341, 342) which is at least partially coincident with the first window (241, 242).

2. Panel according to the preceding claim, **characterized in that** an electric conductive material (25) is positioned between the connecting terminal (231, 232) and the metal layer (212) via at least one of the first window (241, 242) and the second window (341, 342).

3. Panel according to the preceding claim, **characterized in that** the electric conductive material (25) is a conductive adhesive charged with silver.

4. Panel according to any one of the preceding claims, **characterized in that** at least one of the first window (241, 242) and the second window (341, 342) is (are) a rectangle, the longer side of which is directed perpendicularly to the direction of circulation of the current in the metal layer (212).

5. Panel according to any one of the preceding claims, **characterized in that** the insulating layer (213) comprises several parallel rectangular first windows located at the connecting terminal; the longer side of each of these first windows is directed perpendicularly to the direction of circulation of the current in the metal layer.

6. Panel according to either one of Claims 4 and 5, **characterized in that** at least one of the rectangular window(s) exhibits a length equal to one of the dimensions, in the plane of Panel, of the connecting terminal (231, 232) with which the window (241, 242) is combined.

7. Panel according to any one of the preceding claims, **characterized in that** the conductive coating (21) is a low-emissivity coating.

8. Process for the manufacture of a glazing panel (200, 300) comprising the following stages:
• coating (401), at least partially, a first glass sheet (20) using an electrically conductive coating (21), the conductive coating comprising at least one stack of a metal layer (212) and of an insulating layer (213), the metal layer being positioned between the first glass sheet and the insulating layer,
• positioning (402) at least one electronic component (23) on the first glass sheet, the electronic component comprising at least one connecting terminal (231, 232) electrically connected to the conductive coating (21),
**characterized in that** the process also comprises a stage (403) of producing at least one first window in the insulating layer, said first window opening onto the metal layer located at the connecting terminal, and **in that** the process also comprises a stage of producing, in the metal layer (212), a second window (341, 342) which is at least partially coincident with the first window (241, 242).

9. Process according to the preceding claim, **characterized in that** an electric conductive material (25) is positioned between the connecting terminal and the metal layer via at least one of the first window (241, 242) and the second window (341, 342).

10. Process according to the preceding claim, **characterized in that** the electric conductive material (25) is a conductive adhesive charged with silver.

11. Process according to any one of Claims 8 to 10, **characterized in that** at least one of the first window (241, 242) and the second window (341, 342) is (are) a rectangle, the longer side of which is directed perpendicularly to the direction of circulation of the current in the metal layer.

12. Process according to any one of Claims 8 to 10, **characterized in that** the insulating layer comprises several parallel rectangular first windows located at the connecting terminal; the longer side of each of these windows is directed perpendicularly to the direction of circulation of the current in the metal layer.

13. Process according to either one of Claims 11 and 12, **characterized in that** at least one of the rectangular window(s) exhibits a length equal to one of the dimensions, in the plane of Panel, of the connecting terminal (231, 232) with which the window (241, 242) is combined.

14. Process according to any one of Claims 8 to 13, **characterized in that** the first window (241, 242) in the insulating layer and the second window (341, 342) in the metal layer are obtained by ablation respectively of the insulating layer and of the metal layer using at least one of the following techniques:
• ablation by electromagnetic radiation;
• mechanical ablation;
• fluid jet ablation;
• lithographic ablation.
